# EUROPEAN PATENT SPECIFICATION

(11) **EP 3 823 736 B1**
(45) Date of publication and mention of the grant of the patent: **04.11.2026**
(21) Application number: 19837720.2
(22) Date of filing: 30.04.2019
(51) Int. Cl.: B01D 3/00, B01D 3/14, B01D 3/40, B01D 1/00, B01D 3/42, C10B 53/07, C10G 1/00, C10G 1/10, C10G 25/00, C10G 25/12, C10G 29/02, C10G 29/20, C10G 53/08

(54) **METHODS AND APPARATUS FOR CLARIFICATION OF PYROLYSIS OILS**
VERFAHREN UND VORRICHTUNG ZUR KLÄRUNG VON PYROLYSEÖLEN
PROCÉDÉS ET APPAREIL DE CLARIFICATION D'HUILES DE PYROLYSE

(30) Priority: 20.07.2018 US 201816041010
(43) Date of publication of application: 26.05.2021
(73) Proprietor: RJ Lee Group, Inc., Monroeville, Pennsylvania 15146 (US)
(72) Inventor: LEVINE, Alan M., Monroeville, Pennsylvania 15146 (US); MONACO, Steven J., Venetia, Pennsylvania 15367 (US); LEE, Richard J., Murrysville, Pennsylvania 15668 (US)
(74) Representative: Mewburn Ellis LLP
(86) International application number: PCT/US2019/029796
(87) International publication number: WO 2020/018165

(56) References cited:
- US-A1- 2011 139 602
- US-A1- 2013 144 089
- US-A1- 2014 053 456
- US-A1- 2014 352 204
- US-A1- 2015 040 922
- US-A1- 2016 333 274
- US-A1- 2019 091 603

## Description

### BACKGROUND OF THE INVENTION

### 1. Field of the Invention

The present invention relates to methods and apparatus for converting the black color of pyrolysis oil derived from thermal treatment of vehicle tires or other waste materials to a lighter more yellow color. It also relates to methods and apparatus for removing polar compounds from pyrolysis oil and reducing the polyaromatic hydrocarbons (PAH) levels in the pyrolysis oils.

### 2. Description of the Prior Art

It has been known to employ methods of pyrolysis of hydrocarbon materials such as waste vehicle tires to produce useful byproducts. This not only minimizes the problem of huge accumulations of discarded tires, but produces economically worthwhile products. See U.S. Patent 6,833,485, for example. The pyrolysis process may produce a carbon product, a liquid hydrocarbon product and a combustible gas.

U.S. Patent 6,835,861 discloses a low energy method of pyrolysis of hydrocarbon materials which employs a clay and metal catalyst. It produces a solid carbonaceous material, an oil and combustible gas products. The carbon black produced by the recited method was said to contain no detectable PAHs. The carbon char is said to be usable as a source of fuel. High purity carbon blacks were said to be usable for toner and electrical sensors. Liquid oil and gas produced by the method are said to be easily separable from the system.

U.S. Patents 8,263,038 and 8,512,643 recite a method of devolatilizing recycled carbon black obtained from the pyrolysis of tires by deagglomerating the recycled carbon black to reduce the black particle size and impinging a countercurrent air current on the black particles to increase the processing temperature and enhance release of volatiles.

Pyrolysis oil produced by heating rubber, such as tire rubber in the absence of oxygen, produce a black oil which has a strong sulfur and amine odor. Although the oil has an appearance much like crude oil, its composition is substantially different.

While both crude oil and pyrolysis oil contain pentane (C5), heptane (C7) and other alkane insolubles, the insolubles from crude oil consist of paraffins and asphaltenes. Insolubles from pyrolysis oil consist of polar compounds such as benzoic acid and oxygenates, sulfur and nitrogen compounds.

Tire pyrolysis oil has currently been used as a crude fuel or for down well application in order to clear oil well deposits. It has been known to collect fractions of the oil by distillation, but except for the fractions at the very light ends, the distillates are black and contain an objectionable sulfury/amine odor. It has been suggested that the black color was entrained carbon, however, when filtration was attempted in order to remove the black color, this was not successful.

In spite of the known prior art, there remains a very real and substantial need for solutions to the foregoing problems. US 20140352204 A1 describes a pyrolysis system, and a method for bio-oil component extraction from a bio-oil vapor.

### SUMMARY OF THE INVENTION

The method and apparatus of the present invention effectively reduces the undesired black color to a transparent dark amber and preferably to a transparent yellow which is more preferred with light transparent yellow being most preferred. The invention also effects a meaningful reduction in the undesired sulfury/amine odor. Finally, the preferred final product will have a reduction in the level of PAH's and be under 1 ppm of the PAH Benzo(a)pyrene.

The temperature range for removal of solvent from oil or clay residue is from the boiling point of the solvent up to about the boiling point of the oil fraction. For example, for hexane, when being used to process the unfractionated pyrolysis oil, the temperature range would be about 68°C to 100°C. It has been found that exceeding the upper limit incurs an increase in the cost of the process without providing an offsetting comparable benefit. A preferred temperature range would be between 68°C and 78°C and the most preferred temperature range would be between 68°C and 70°C.

In alternate embodiments of the invention, separation may be effected by a distillation column or a wiped film evaporator (WFE) with a jacket or heater heating the hexane, solvent and oil mixture to above the solvent's boiling point but not above the boiling point of the oil. Another advantage of the embodiments employing the distillation tower or wiped film evaporator is subject to the capacity of the column and evaporator, the operation may be performed on a continuous basis limited only by the capacity of the clay column.

It is an object of the present invention to provide a method according to claim 1 and apparatus to claim 9

Preferred embodiments are defined in the dependent claims.

### BRIEF DESCRIPTION OF THE DRAWINGS

Figure 1 is a schematic illustration of a form of apparatus employable in the present invention using a distillation-elution method.
Figure 2 is a schematic illustration of a form of apparatus employable in the present invention employing a forced flow-elution method.
Figure 3 is a schematic illustration of another embodiment of the distillation elution apparatus of the present invention employing a wiped film evaporator (WFE).
Figure 4 is a schematic illustration of another embodiment of the distillation-elution apparatus employing a packed column employable in the method of the present invention.
Figure 5 is a plot of weight percent versus temperature versus derivative weight percent showing the relationships in drying clay.
Figures 6 through 10 are schematic views showing the operation of subunits of the general system shown.

### DESCRIPTION OF THE PREFERRED EMBODIMENTS

Removal of polar compounds is accomplished by adjustment of conditions such that the polar compounds bind to activated attapulgite which is also known as palygorskite. We have tried a number of other materials without meaningful success. These included but were not limited to bentonite, montmorillonite, activated carbon, charcoal, carbon black and diatomaceous earth, but were not successful in producing the desired result.

The method of the present invention involves initially adjusting the polarity of the unfractionated pyrolysis oil or pyrolysis oil fractions, absorption of the contaminants onto clay followed by elution and separation of the clean oil from the adjusting solvent.

The polarity is adjusted by dilution with a nonpolar solvent which may be an alkane or combination of several alkanes. The alkanes may be ones having 4 to 10 carbons (butane, pentane, hexane, heptane, octane, nonane or decane) and preferably pentane, hexane, and heptane (C5-C7 ) with hexane (C6) being the preferred alkane. If desired, combinations of two or more alkanes may be employed in the method.

The unwanted components are absorbed onto the attapulgite. These unwanted components include alkane-insolubles of polar compounds such as benzoic acid, quinolone, steric acid oxygenates, sulfur-containing compounds and nitrogen-containing compounds. The methods and apparatus of the present disclosure removes the polar compounds. This may be accomplished by precipitation and filtration or centrifugation of insolubles and binding of the polar compounds to activated attapulgite clay. The removal of the polar compound not only removes the black color and undesired odor, but the pyrolysis oil maintains its physical and chemical properties. This is followed by elution of the clean oil in the nonpolar solvent. The solvent is then separated from the oil by evaporation. After that, the column is cleaned for reuse with a polar solvent such as acetone, methanol, tetrahydrofuran or dimethylformamide or other polar solvents, for example.

The heavier end of pyrolysis oil is known to contain various poly-aromatic hydrocarbons (PAHs) including benzo(a)pyrene which is the most carcinogenic of this compound group. It has been found that the present invention clarifies the oil color, reduces the odor, and has reduced levels of PAHs.

The method of the present disclosure involves removal, by precipitation and adsorption of the black material from the oil by using an alkane or alkane mixture selected from the group consisting of C4 through C10 (butane, pentane, hexane, heptane, octane, nonane and decane). The preferred alkane is one selected from the group consisting of alkanes C5 through C7 (pentane, hexane and heptane). The most preferred alkane is hexane.

The oil to be charged onto the column is diluted with an alkane solvent at a ratio of about 1:2 to 1:30 (oil to alkane) by volume and, preferably, of about 1:4 to 1:15 and, most preferably, of about 1:6 to 1:10. The diluted oil is aged by sitting at room temperature for at least 30 minutes to allow precipitation. The aged diluted oil can be filtered or centrifuged to remove precipitate prior to charging onto the column or it can be charged onto the column without removing precipitate. The oil is charged slowly onto the top of the bed and the fluid is collected from the bottom of the column. For example, this could involve approximately 0.22 liters per hour of column flow per liter of void volume (using a column with approximately 18.2-liter void volume is equivalent to 4 liters per hour column flow). The range of flow rates is about 0.1 to 0.6 liters per hour of column flow per liter of void volume, a preferred range would be about 0.2 to 0.4 liters per hour of column flow per liter of void volume and a most preferred range would be about 0.3 to 3.5 liters per hour of column flow per liter of void volume.

The ratio of clay to oil to be clarified is in the range of about 4:1 to 20:1 by weight, or preferably about 6:1 to 15:1 by weight and, most preferably, about 6:1 to 10:1 by weight. The greater weight enhances recovery.

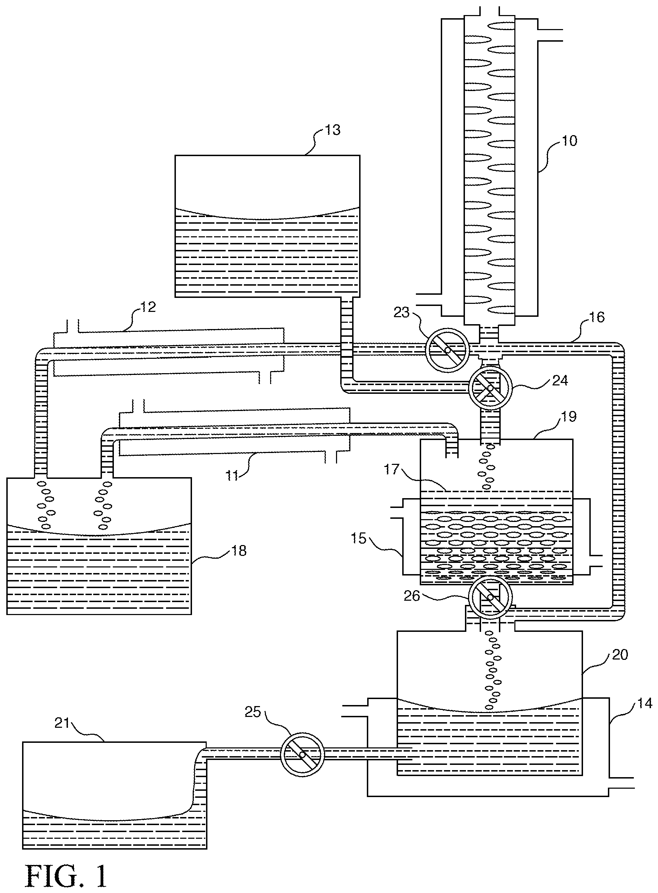

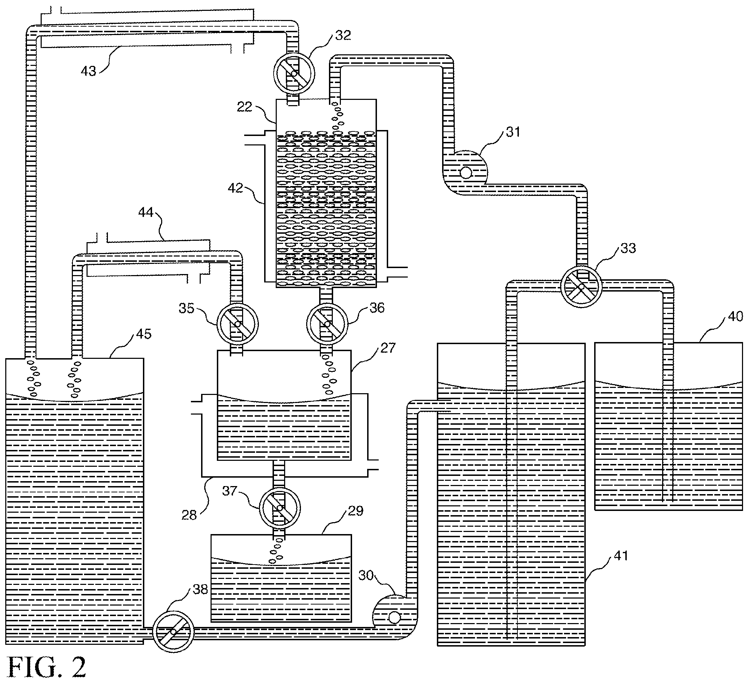

Figure 1 illustrates an alternate method (referred to herein as "distillation-elution method") of processing the pyrolysis oil which method is slightly preferred over the forced-flow-elution method to be described herein in connection with figure 2. One advantage over the forced-flow-elution method is that the distillation-elution method uses less solvent and, therefore, can be more advantageously employed economically.

While both the methods and apparatus of Figures 1 and 2 will effectively practice the present disclosure, there is a preference for Figure 1. The distillation-elution method and apparatus (shown in Figure 1) employs less solvent to elute material from the column in the elution phase and employs less wash solvent in the wash phase, Also, since the column is eluted and washed with distilled solvent, it typically operates at a higher temperature than the forced-flow-elution method. This results in eluting and washing at greater efficiencies.

With respect to eluting oil, there are two effective alternate procedures for washing the column. In an example of the first method, hexane is delivered to the top of the bed by means, for example, of a pump and is allowed to migrate down by gravity. The flow is controlled through the columns at approximately 4 liters per hour washing the bed with up to 30 bed volumes using a valve at the bottom of the column. The eluent contains extracted oil and hexane. The oil and hexane is collected in a vessel and separated from each other by distillation at a temperature sufficient to evaporate hexane (68°C ), but not high enough to evaporate the oil. The recovered oil is recovered at the distillation column bottom. The column is then washed and prepared for the next cycle of operation.

In an example of the second elution process, freshly distilled hexane is delivered to the top of the column using a distillation system where the eluent bottom of the column is heated at a temperature sufficient to evaporate hexane (68°C), but not high enough to evaporate the oil.

The evaporation temperatures for a particular solvent being employed for elution or cleaning and for a particular pyrolysis oil fraction are (1) between the boiling point of the particular solvent and 32°C above the boiling point of the most volatile compound in the particular pyrolysis oil fraction or (2) preferably, between the boiling point of the particular solvent and 10°C above the boiling point of the most volatile compound in the oil fraction or (3) most preferably, between the boiling point of the particular solvent and 2°C above the boiling point of the most volatile compound in the oil fraction.

For example, for hexane being used to clarify unfractionated pyrolysis oil, the ranges would be (1) between about 68°C to 100°C or (2) preferably between about 68°C and 78°C or (3) most preferably, between about 68°C and 70°C. The ranges for the other alkanes will be known to those skilled in the art and can be readily determined.

While the preferred alkanes are ones having 4 to 10 carbons, it will be appreciated that they may be employed individually, in the process, hexane and butane, for example, may be employed in combinations. Also, while for purposes of example, hexane, the preferred alkane has been used individually, other alkanes within the preferred group having 4 to 10 carbons may be employed individually.

In this manner, solvent is delivered to the top of the column continuously. The flow is controlled through the column at approximately 4 liters per hour, washing the bed with up to 30 bed volumes using valve at the bottom of the column.

The difference between this process and a known standard column chromatography process is our distillation-elution method employed less solvent and higher temperature. The present invention differs from soxhlet which is used to continuously soak a solid, in our case clay, to remove bound or captured material. It does not flow the solvent through the material in a top down fashion as is required for chromatography, thus, it is not appropriate for our process. In another process, fiber thimbles permit the residue to flow out to the sides of the crucible. This brings a portion of the extract to the bottom of the vessel without residence time with clay thereby minimizing contact therebetween.

Our process has been found to be more effective for removal of the polar substances from the oil and polar substances from the column during cleanup.

An example of a cycle of operation of the system of Figure 1 will be considered. The system shown in Figure 1 employs evaporation and gravity in order to deliver solutions and uses about 10 to 15 times less solvent than the forced-flow elution method shown in Figure 2 to be described hereinafter. In order to achieve the same degree of purification in this example of the distillation-elution method, the oil and hexane are mixed at an oil to hexane ratio of about 1.4 to 1.15 and most preferably about 1:6 to 1:10 ratio of oil to hexane prior to charging onto the column. The oil and hexane are mixed in vessel 13 and is allowed to sit for about two or more hours. Solids that precipitate in vessel 13 may be removed by filtration or centrifugation or can be left suspended in this fluid. The liquid is fed by gravity through valve 24 to column 17 at approximately the rate of 0.22 liters per hour of column flow per liter of void volume. The bottom valve 26 remains closed for about 1 to 2 hours contact time. Valve 26 is opened and a volume of hexane equivalent to the oil and hexane mix in tank 20 is maintained at a boiling temperature by heat exchanger 14 which is at least 68°C for hexane. The hexane vapors travel through tube 16 and are condensed by condenser 10. The condensed hexane drips through valve 24 and on to and through column 17 and then from valve 26 into tank 20. The flow is preferably controlled at about 0.1 to 0.6 liters per hour of column flow per liter of void volume using valve 26. The oil elution process is complete after about 10 to 30 column bed volumes of hexane have been eluted through column 17.

At this point valve 23 is opened and valve 24 and 26 are closed. The contents of tank 20 are heated to at least 68°C to remove the hexane completely by evaporation from tank 20. In the case of hexane, it is evaporated from tank 20, passes through tube 16 through open valve 23 and is condensed by condensers 10 and 12 for delivery to tank 18. Product oil in tank 20 is then drained through valve 25 into tank 21. After that, valve 25 is closed and tank 21 is replaced with a clean tank. The residual hexane is removed from the clay by closing valves 24 and 26 to isolate the column 17 and heating the column using heat exchanger 15 to evaporate residual hexane through condenser 11 and into tank 18.

The column is then cleaned with a polar solvent. The preferred solvent for cleaning the clay is acetone. In the case of acetone, it is transferred into tank 20 while valves 23, 25 and 26 are in the closed position. Valve 24 is open to the condenser 10. Tank 20 is heated to the boiling point of acetone using exchanger 14. The acetone from tank 20 evaporates and passes through tube 16, after which it is condensed in condenser 10 and drips through valve 24 and onto and through column 17. The bottom valve 26 is open to allow dripping into tank 20. This is continued for about 30 bed volumes (the volume of clay in the column is a "bed volume"). Tanks 18 and 21 are replaced with clean tanks for this part of the process. Valves 24 and 26 are closed and valve 23 is open. Tank 20 continues to be heated until the acetone is completely evaporated. The acetone vapors travel through tube 16 and are condensed through condensers 10 and 12. Recovered acetone is collected in tank 18. The waste material collected in tank 20 is drained through valve 25 into tank 21 for disposal or alternate use. The tanks are then cleaned and are ready for their initial set up for the processing of the next batch.

Figure 2 illustrates schematically an example of a forced-elution apparatus usable in the method of the present disclosure.

In this example, a ratio of oil to hexane of 1:6 to 1:10 is employed. The oil-hexane mixture is in vessel 40 and is allowed to sit for about two hours. Solids that precipitate in the vessel 40 may be removed by either filtration or centrifugation or can be left suspended in this fluid. The liquid is pumped through valve 33 by pump 31 and onto column 22. The oil is pumped slowly onto the top of the bed and fluid is collected from the bottom of the column 22 at approximately 0.22 liters per hour of column flow per liter of void volume (using a column with approximately an 18.2 liters void volume which is equivalent to 4 liter per hour column flow). Once the material is charged onto the column 22, the column bottom valve 36 is closed for about 1 to 2 hours to allow sufficient contact time between the liquid and the clay. Valve 36 is then opened and valve 33 is turned open to allow hexane from tank 41 to be pumped by means of pump 31 onto the column 22 at a rate of approximately 0.22 liters per hour of column flow per liter of void volume (using a column with approximately an 18.2 liter void volume which is equivalent to 4 liters per hour column flow.) The column is then washed with about 30 times the volume of oil-hexane that was charged into the column of hexane from tank 41 with valve 36 open, 37 closed and valve 35 in the open position and into tank 27. Tank 27 is heated to approximately 68°C by heating jacket 28 and vapors condensed by condenser 44. Hexane is collected in tank 45 until only oil remains in tank 27. The cleaned oil is then delivered though valve 37 into tank 29. Valves 33, 35, 36, 37 are closed with valve 32 being open. Jacket 42 is heated and jacket 43 is cooled to allow the residual hexane to be removed from the column 22 and the clay to be dried. Tank 45 will hold all recovered hexane which ultimately will be pumped through valve 38 by pump 30 to tank 41 for reuse.

The evaporation temperatures for a particular solvent being employed for elution or cleaning and for a particular pyrolysis oil fraction is (1) between the boiling point of the particular solvent and 32°C above the boiling point of the most volatile compound in the particular pyrolysis oil fraction or (2) preferably, between the boiling point of the particular solvent and 10°C above the boiling point of the most volatile compound in the oil fraction or (3) most preferably, between the boiling point of the particular solvent and 2°C above the boiling point of the most volatile compound in the oil fraction.

For example, for hexane being used to clarify unfractionated pyrolysis oil, the ranges would be (1) between 68°C to 100°C or (2) preferably between 68°C and 78°C or (3) most preferably, between 68°C and 70°C.

A column bed that could treat four liters of oil employed in an example test was approximately 18 inches in diameter and 24 inches high and have a capacity of approximately 34 liters. The bed was filled with about 16Kg of clay which is approximately 32 liters and was wet with approximately 20 liters of hexane. The column distribution consisted of screen plates and glass wool at the top and at the bottom with a valve at the bottom to control flow.

As shown in Figure 2, valve 38 is opened and the contents of tank 45 is pumped through pump 30 into tank 41. When the transfer is complete, valve 38 is closed. Tank 41 is replaced with a tank containing acetone. Acetone from tank 41 is pumped though valve 33 using pump 31 and is delivered into column 22. The acetone extracts the material in column 22 and delivers it through open valve 36 into tank 27.

The material collected in tank 27 is evaporated to collect acetone into tank 45. Vapors passing through open valve 35 are condensed by cooling jacket 44 with the acetone being collected until only waste residue remains in tank 27. The temperature ranges for the wash procedure are as described hereinbefore. Waste material from tank 27 is drained through valve 37 to tank 29 for disposal or alternate use. The tanks are then replenished to the initial setup conditions for the next cycle of operation.

The following discloses two alternate embodiments with respect to the foregoing disclosure which focus on separation of vaporized nonpolar solvents and separating them from the pyrolysis oil using in one instance a wiped film evaporator and, in another, distillation column. Apart from the specific way disclosed method and apparatus variations focusing on these alternate embodiments the preferred characteristics may remain the same as the foregoing.

The additional embodiments disclosed in this application involve the use of a wiped film evaporator (WFE) or a distillation column. The solvent is stripped from the oil exiting the clay column using a distillation column or a wiped-film evaporator (WFE). This involves heating the mixture of oil and solvent in a tank at a temperature above the solvent's boiling point and below the boiling point of the oil.

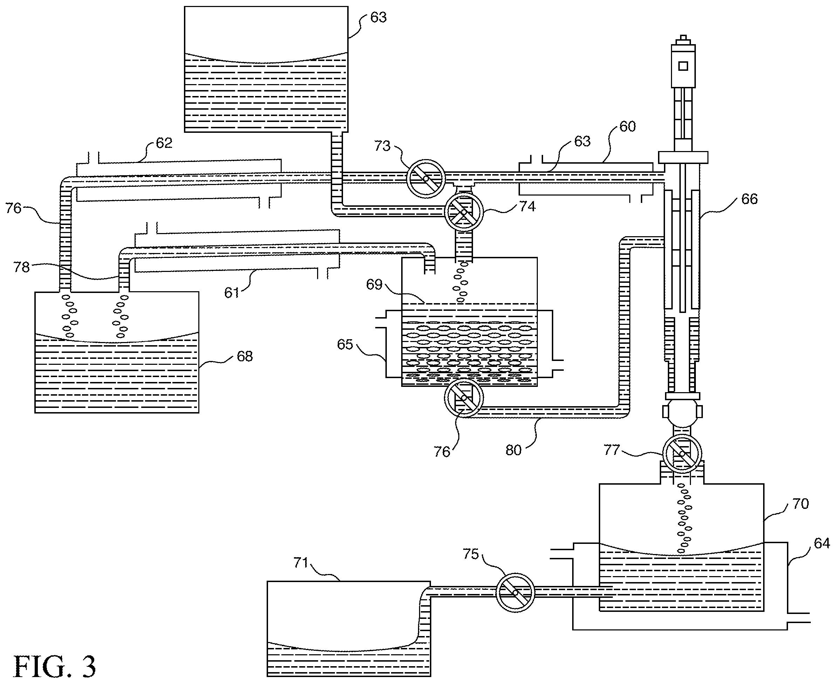

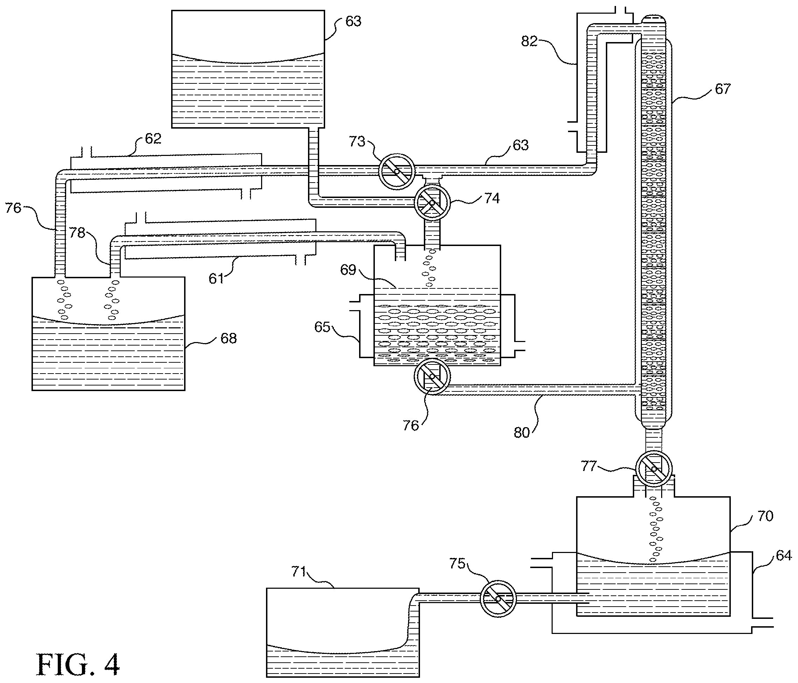

The variations in the system for clarification of pyrolysis oil shown in Figures 3 and 4 employ evaporation and gravity in order to deliver solutions to the column.

Identical reference numbers will be employed for the same elements in both Figures 3 and 4. These embodiments also use about 10 to 15 times less solvent than the forced-flow elution method shown in prior art.

In addition, these embodiments allow for continuous operation, limited to the capacity of the absorbent packing column 69. In order to achieve the same degree of purification in this example of the distillation-elution method, the oil and alkane, which is preferably hexane, are mixed at a ratio of oil to alkane of about 1:4 to 1:15, and preferably a 1:6 to 1:10 ratio of oil to hexane prior to charging onto the absorbent column 69. The oil and hexane are mixed in vessel 63 and the mixture is allowed to sit for at least about two hours. Solids that precipitate in vessel 63 may be removed by filtration or centrifugation or can be left suspended in this fluid. The liquid is fed by gravity through valve 74 to absorbent packing column 69 at approximately the rate of about 0.1 to 0.6 liters per hour of column flow per liter of void volume and preferably, at a rate of about 0.2 to 0.3 liters per hour of column flow per liter void volume. The bottom valve 76 remains closed for about 1 to 2 hours contact time. Heat exchanger 65 may be employed to heat the oil and hexane mixture in absorbent packing column 69 to vaporize the hexane. Valve 76 is opened to a position to allow hexane and eluted oil to flow through pipeline 80 to heated distillation column 67 where the hexane is stripped from the oil and the oil is delivered by gravity through valve 77 to tank 70. The hexane in vaporized form is stripped from the oil and flows through wiped film evaporator 66 (WFE) or distillation column 67 is condensed by condenser 60 (Fig. 3) or 82 (Fig 4), respectively and drips through valve 74 on to and through absorbent packed column 69 (Fig. 3). The flow continues through absorbent packed column 69 through valve 76 and back into wiped film evaporator 66 (Fig 3) or distillation column 67 (Fig. 4). The flow continues through absorbent column 69 and out of the bottom through valve 76 and through pipeline 80 and onto WFE 66 or absorbent packed column 67 where the cycle continues. The flow is preferably controlled at about 0.1 to 0.6 liters per hour of column flow per liter of void volume using valve 76 and temperature control in Wiped Film Evaporator 66 or column 67. The oil elution process is complete after about 10 to 30 column bed volumes of hexane have been eluted through absorbent packed column 69 or WFE 67 or the absorbent column effluent is clarified.

Tank 63 is allowed to empty and absorbent packed column 69 is drained through pipe 80. Then valve 74 is positioned to stop flow from tank 63 and valve 73 is opened to allow flow through condenser 60 by pipeline 63, 77 and into hexane receiving tank 68. Tank 63 is allowed to empty and absorbent packed column 69 is drained through column 66 to complete the cycle. Recovered vaporized hexane passes by pipeline 78 through condenser 61 and is collected in tank 68. At this point, the packing in absorbent packed column 69 is regenerated. After the process has been completed, the clay may be regenerated by washing with a polar solvent.

Regeneration is preferably accomplished in the following manner. Valve 73 is opened and valves 74 and 76 are closed. Product oil in tank 70 is then drained through valve 75 into tank 71. After that, valve 75 is closed and tanks 68 and 71 are replaced with clean tanks. Absorbent packed column 69 is then cleaned with a polar solvent. The preferred solvent is acetone. The polar solvent is transferred into tank 63 while valve 74 is in the closed position. Valves 74 and 76 are opened and acetone flows through absorbent packed column 69, through valve 76, and into WFE 66 (Fig. 3) or column 67 (Fig. 4). Acetone strips residue oil from absorbent packed column 69 and flows out of the top of column 66 and through absorbent packed column 69 and continues the cycle. The residue from absorbent packed column 69 and WFE 66 transfers by gravity to tank 70. This is continued for about 20 to 40 bed volumes (the volume of clay in the column is a bed volume) or until column 69 effluent is clear. Valve 74 is positioned to close tank 63 and open pipeline 76. The acetone is drained from absorbent packed column 69 and cycled through condenser 82 which condenses vaporized hexane which passes through the absorbent packed column 66 through valve 76 and pipeline 80 to Wiped Film Evaporator 66 or column 67 through condenser 60, 82, respectively into tank 68. Heat exchanger 65 is heated to between about 150°C and 250°C, valve 74 is closed and residual acetone is driven from the wiped film evaporator 66 or column 67 and flows in pipeline 78 and is condensed through condenser 61 into tank 68 for reuse. The waste material collected in tank 70 is drained through valve 75 into tank 71 for disposal or alternate use. The tanks are then cleaned and are ready for their initial set up for the processing of the next batch.

Referring to Figure 4, it will be appreciated that the major components of the system and mode of operation are generally similar to that of the distillation column embodiment of Figure 3. In this embodiment, a column 67 is employed. The mixture of vaporized hexane and oil passes through valve 76 and pipeline 80 to the wiped film evaporator 67. The portion exiting from the top is condensed in condenser 82 and is either recycled to absorbent packed column 69 or passes through valve 74 to absorbent packed column 69 and then through pipe 78 passes through condenser 61 and is delivered to tank 68. The lower portion of column 67 has its separated oil delivered through valve 77 to tank 70. The operation of this embodiment is otherwise similar to the embodiment of Figure 3. The oil in tank 70 can be heated by means of heat exchanger 64 if it is noted that hexane is observed to condense in the tank.

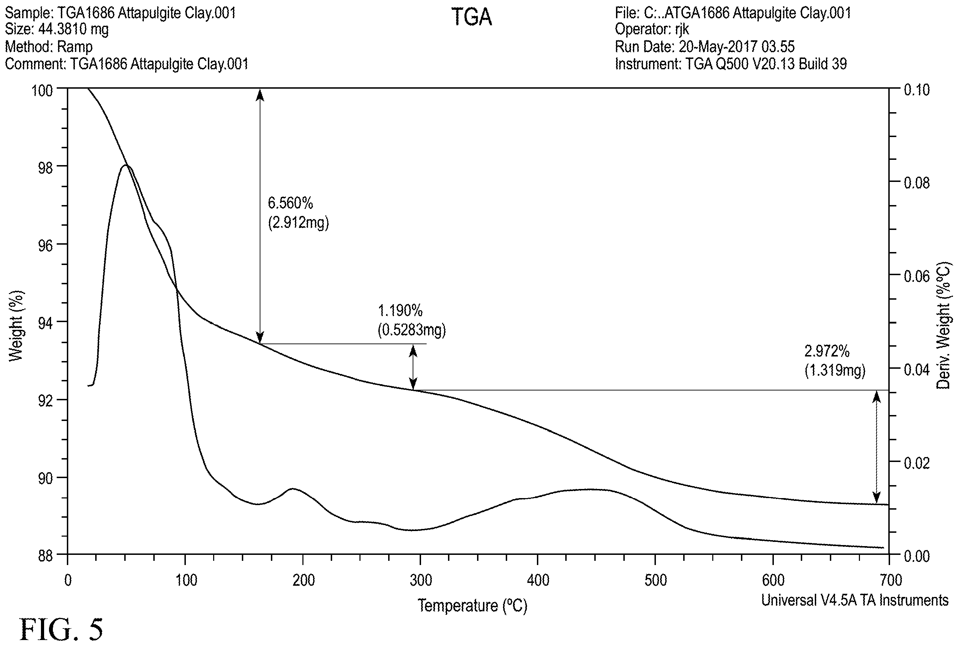

We have found that the attapulgite clay works more efficiently after being activated. Activation may be accomplished by drying it at about 120°C to 300°C and preferably about 140°C to 250°C until there is no weight change. Referring to Figure 5, the appropriate temperature was reached using a TGA with a ramp rate of 10°C/minute to 700°C. Although the clay can be dried above 150°C, clay tends to decompose at that temperature and loses much of its capacity. Figure 3 shows the results of Thermogravimetric Analysis (TGA) of the attapulgite testing showing the percent weight loss as a function of temperature. This profile shows the temperature at which free water and hydrated waters evolve. We have found that driving off the higher temperature hydration waters decreases capacity of the clay for the clarification residues.

In cleaning the clay for reuse, it is preferred to use a polar solvent such as selected from the group consisting of acetone, methanol, tetrahydrofuran, dimethyl-formamide or another solvent suitable for the purpose. At present, acetone is the preferred polar solvent for this purpose. In cleaning, the flow is controlled through the column at approximately 4 liters per hour washing the bed with up to 30 bed volumes using the valve at the bottom of the column.

In another embodiment, freshly distilled hexane is continuously delivered to the top of the column using a distillation system wherein the eluent from the bottom of the column is heated to a temperature sufficient to evaporate the polar solvent, but not high enough to evaporate the oil. For example, for hexane, an effective range might be about 68°C to 75°C. The ranges for other alkanes known to those skilled in the art can readily be determined. In this manner, fresh solvent is delivered to the top of the column continuously. The flow is controlled through the column at about 2 to 8 liters per hour, with a preferred rate of about 3 to 5 liters per hour washing the bed with up to about 30 bed volumes using a valve at the bottom of the column.

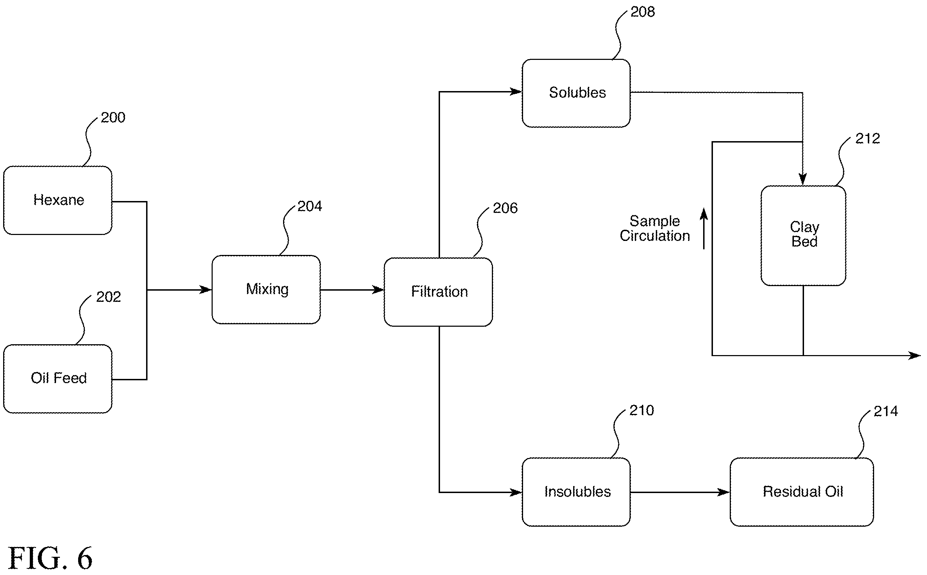

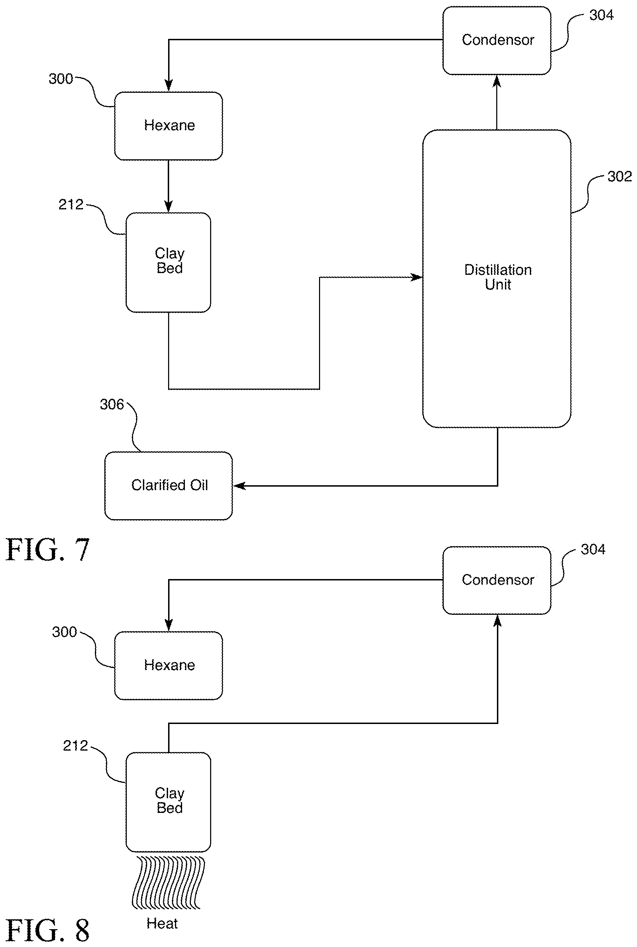

Referring generally to Figure 6, it is seen that the hexane feed 200 and pyrolysis oil feed 202 are mixed at 204. The mixture of the pyrolysis oil and the nonpolar solvent which preferably may be hexane, is delivered to filtration unit 206 resulting in a solubles filtrate 208 and insolubles filter residue 210. After filtration to remove undesired materials in the filtration unit 206, the oil/hexane output of filtration unit 206 is directed through solubles 208 clay bed 212. The output of insolubles 210 will be combined with residual oil 214. Oil from the clay bed 212, also known as the absorbent packed column, will become the feed for a distillation unit in Figure 7.

Referring now to Figure 7, there is shown a subunit of the global schematic for stripping hexane from the clay bed eluent and separating the hexane from the oil. This is achieved by the distillation unit 302. Hexane 300 is evaporated and condensed 304 and fed to the top of the clay bed 212 and flows through carrying cleaned oil to the distillation unit 302 to continue the cycle. The heavier clarified oil 306 is separated by gravity and is collected.

Referring to Figure 8, which shows another subunit of the global process of Figure 6 in which residual hexane 300 is driven off of the clay bed 212 through the condenser 304 and collected for reuse. The clay bed 212 is heated to above the boiling point of hexane but, below the boiling point of the process oil.

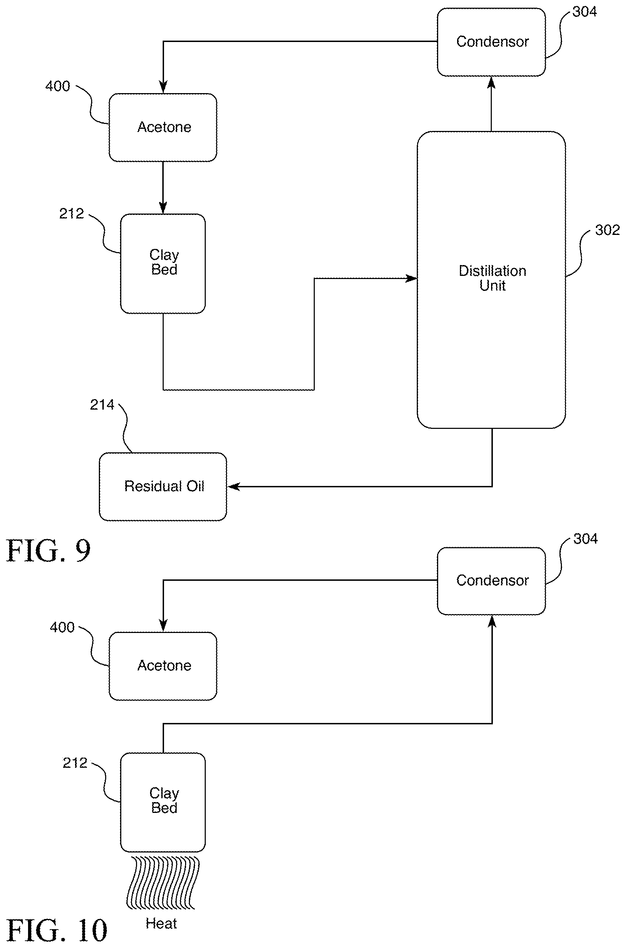

Referring to Figure 9, the clay bed is cleaned with a polar solvent, preferably acetone 400 to remove the polar residue oil 214. Acetone 400 strips residue oil 214 from the clay column 212. The distillation unit 302 strips the acetone 400 from the residue oil 214/acetone 400 eluted from the clay bed 212. The residue oil 214 drains down and the acetone 400 evaporates and is condensed and cycled back to the clay bed 212. This results in the clay bed having been cleaned.

Referring to Figure 10, the residual acetone 400 from the clay bed 212 is removed by heating and condensing 304. This is similar to the process component described in Figure 8. The clay bed 212 is heated to above the boiling point of acetone, but not above the boiling point of the residue oil.

While the schematics of Figures 6 through 10 have shown the distillation unit, the alternate embodiment would at the same position, use the wiped film reactor in the manner disclosed herein.

## Claims

1. A method of processing pyrolysis oil comprising
adjusting the polarity of said oil with a nonpolar solvent by mixing the pyrolysis oil and the nonpolar solvent,
binding insoluble components in the pyrolysis oil to clay in a clay column (69) by contacting the mixture of the pyrolysis oil and the nonpolar solvent with the clay,
heating said mixture in the clay column to a temperature at which said nonpolar solvent will vaporize,
eluting the mixture of clean oil and the nonpolar solvent from the clay column (69), and separating the nonpolar solvent from the clean oil employing a method selected from the group consisting of a distillation column (67) and a wiped film evaporator (66).

2. The method of claim 1 including
employing attapulgite as said clay.

3. The method of claim 1 including
effecting said separation of said solvent from said oil by a distillation column (67).

4. The method of claim 1 including
effecting said separation of a said solvent from said oil by a wiped film evaporator (66).

5. The method of claim 1 including
employing an alkane as said nonpolar solvent.

6. The method of claim 5 including
employing an alkane selected from the group consisting of alkanes having 4 to 10 carbons, optionally having 5 to 7 carbons.

7. The method of claim 5 including
employing a mixture of two or more alkanes selected from the group consisting of alkanes having 4 to 10 carbons.

8. The method of claim 1 including
a first step of activating said clay.

9. An apparatus for processing pyrolysis oils comprising
a first vessel (63) structured to receive a mixture of said oil and a nonpolar solvent,
a clay column (69) operatively associated with said first vessel for receiving said mixture,
said clay column structured to heat said mixture to a temperature at which said nonpolar solvent will vaporize,
said apparatus having a unit selected from the group consisting of a distillation column (66) and a wiped film evaporator (67) for separating said vaporized nonpolar solvent from said pyrolysis oil.
a condenser (61) for condensing said vaporized nonpolar solvent,
a second vessel (68) for receipt of said condensed vapors, and
a third vessel (70) for receiving oil separated from said mixture of said oil and vaporized nonpolar solvent.

10. The apparatus of claim 9 including
said unit being a distillation column (66) or a wiped film evaporator (67), and
said apparatus structured to process nonpolar solvents which are alkanes having 4 to 10 carbons.

## Patentansprüche

1. Verfahren zur Verarbeitung von Pyrolyseöl, umfassend:
Einstellen der Polarität des Öls mit einem unpolaren Lösungsmittel durch Mischen des Pyrolyseöls mit dem unpolaren Lösungsmittel,
Bindung unlöslicher Bestandteile des Pyrolyseöls an Ton in einer Tonsäule (69) durch Inkontaktbringen des Gemisches aus Pyrolyseöl und unpolarem Lösungsmittel mit dem Ton,
Erhitzen des Gemisches in der Tonsäule auf eine Temperatur, bei der das unpolare Lösungsmittel verdampft,
Eluieren des Gemischs aus sauberem Öl und dem unpolaren Lösungsmittel von der Tonsäule (69) und
Abtrennen des unpolaren Lösungsmittels vom sauberen Öl unter Anwendung eines Verfahrens, das aus der Gruppe bestehend aus einer Destillationskolonne (67) und einem Dünnschichtverdampfer (66) ausgewählt ist.

2. Verfahren nach Anspruch 1, umfassend
Verwenden von Attapulgit als Ton.

3. Verfahren nach Anspruch 1, umfassend
Bewirken der Abtrennung des Lösungsmittels von dem Öl mittels einer Destillationskolonne (67).

4. Verfahren nach Anspruch 1, umfassend
Bewirken der Abtrennung des Lösungsmittels von dem Öl mittels eines Dünnschichtverdampfers (66).

5. Verfahren nach Anspruch 1, umfassend
Verwenden eines Alkans als das unpolare Lösungsmittel.

6. Verfahren nach Anspruch 5, umfassend
Verwenden eines Alkans, ausgewählt aus der Gruppe bestehend aus Alkanen mit 4 bis 10 Kohlenstoffatomen, gegebenenfalls mit 5 bis 7 Kohlenstoffatomen.

7. Verfahren nach Anspruch 5, umfassend Verwenden eines Gemischs aus zwei oder mehr Alkanen, ausgewählt aus der Gruppe bestehend aus Alkanen mit 4 bis 10 Kohlenstoffatomen.

8. Verfahren nach Anspruch 1, umfassend einen ersten Schritt des Aktivierens des Tons.

9. Vorrichtung zur Verarbeitung von Pyrolyseölen, umfassend
einen ersten Behälter (63), der dazu ausgelegt ist, ein Gemisch aus dem Öl und einem unpolaren Lösungsmittel aufzunehmen,
eine mit dem ersten Behälter wirkverbundene Tonsäule (69) zur Aufnahme des Gemischs,
wobei die Tonsäule dazu ausgelegt ist, das Gemisch auf eine Temperatur zu erhitzen, bei der das unpolare Lösungsmittel verdampft,
wobei die Vorrichtung eine Einheit aufweist, die aus der Gruppe bestehend aus einer Destillationskolonne (66) und einem Dünnschichtverdampfer (67) ausgewählt ist, um das verdampfte unpolare Lösungsmittel von dem Pyrolyseöl abzutrennen,
einen Kondensator (61) zum Kondensieren des verdampften unpolaren Lösungsmittels,
einen zweiten Behälter (68) zur Aufnahme der kondensierten Dämpfe und
einen dritten Behälter (70) zur Aufnahme von Öl, das aus dem Gemisch aus Öl und verdampftem unpolarem Lösungsmittel abgetrennt wurde.

10. Vorrichtung nach Anspruch 9, umfassend die Einheit, die eine Destillationskolonne (66) oder ein Dünnschichtverdampfer (67) ist, und
die Vorrichtung, die so ausgelegt ist, dass sie unpolare Lösungsmittel verarbeitet, bei denen es sich um Alkane mit 4 bis 10 Kohlenstoffatomen handelt.

## Revendications

1. Procédé de traitement d'une huile de pyrolyse, comprenant
l'ajustement de la polarité de ladite huile avec un solvant non polaire par mélange de l'huile de pyrolyse et du solvant non polaire,
la fixation des composants insolubles dans l'huile de pyrolyse à l'argile dans une colonne d'argile (69) par mise en contact du mélange de l'huile de pyrolyse et du solvant non polaire avec l'argile,
le chauffage dudit mélange dans la colonne d'argile à une température à laquelle ledit solvant non polaire se vaporise,
l'élution du mélange d'huile propre et du solvant non polaire de la colonne d'argile (69), et
la séparation du solvant non polaire de l'huile propre en faisant appel à un procédé sélectionné parmi le groupe constitué d'une colonne de distillation (67) et d'un évaporateur à film raclé (66).

2. Procédé selon la revendication 1 comportant l'utilisation de l'attapulgite comme ladite argile.

3. Procédé selon la revendication 1 comportant la réalisation de ladite séparation dudit solvant de ladite huile par une colonne de distillation (67).

4. Procédé selon la revendication 1 comportant la réalisation de ladite séparation dudit solvant de ladite huile par un évaporateur à film raclé (66).

5. Procédé selon la revendication 1 comportant l'utilisation d'un alcane comme ledit solvant non polaire.

6. Procédé selon la revendication 5 comportant l'utilisation d'un alcane sélectionné parmi le groupe constitué d'alcanes ayant 4 à 10 atomes de carbone, éventuellement ayant 5 à 7 atomes de carbone.

7. Procédé selon la revendication 5 comportant l'utilisation d'un mélange de deux ou plusieurs alcanes sélectionnés parmi le groupe constitué d'alcanes ayant 4 à 10 atomes de carbone.

8. Procédé selon la revendication 1 comportant une première étape d'activation de ladite argile.

9. Appareil destiné à traiter des huiles de pyrolyse, comprenant
un premier récipient (63) conçu pour recevoir un mélange de ladite huile et d'un solvant non polaire,
une colonne d'argile (69) associée de manière fonctionnelle audit premier récipient destiné à recevoir ledit mélange,
ladite colonne d'argile conçue pour chauffer ledit mélange à une température à laquelle ledit solvant non polaire se vaporise,
ledit appareil ayant une unité sélectionnée parmi le groupe constitué d'une colonne de distillation (66) et d'un évaporateur à film raclé (67) destiné à séparer ledit solvant non polaire vaporisé de ladite huile de pyrolyse,
un condenseur (61) destiné à condenser ledit solvant non polaire vaporisé,
un deuxième récipient (68) destiné à recevoir lesdites vapeurs condensées, et
un troisième récipient (70) destiné à recevoir l'huile séparée dudit mélange de ladite huile et dudit solvant non polaire vaporisé.

10. Appareil selon la revendication 9 comportant ladite unité étant une colonne de distillation (66) ou un évaporateur à film raclé (67), et
ledit appareil conçu pour traiter des solvants non polaires qui sont des alcanes ayant 4 à 10 atomes de carbone.
